Europäisches Patentamt

European Patent Office

Office européen des brevets

(11) Veröffentlichungsnummer: **0 255 467 B1**

# EUROPÄISCHE PATENTSCHRIFT

(45) Veröffentlichungstag der Patentschrift: **26.08.92**

(51) Int. Cl.⁵: **C05F 9/00**, C05F 9/02

(21) Anmeldenummer: **87730079.8**

(22) Anmeldetag: **20.07.87**

(54) **Verfahren und Vorrichtung zur Fermentierung von Rückständen mit hohem Anteil an organischen Bestandteilen.**

(30) Priorität: **25.07.86 DE 3625317**
**11.09.86 DE 3631170**

(43) Veröffentlichungstag der Anmeldung:
**03.02.88 Patentblatt 88/05**

(45) Bekanntmachung des Hinweises auf die
Patenterteilung:
**26.08.92 Patentblatt 92/35**

(84) Benannte Vertragsstaaten:
**AT BE CH ES FR GB IT LI LU NL**

(56) Entgegenhaltungen:
**EP-A- 0 065 495**
**AT-B- 372 672**
**DE-A- 3 637 393**

(73) Patentinhaber: **MANNESMANN Aktiengesell-**
**schaft**
**Mannesmannufer 2**
**W-4000 Düsseldorf 1(DE)**

(72) Erfinder: **Schütt, Broder**
**Bochumer Strasse 222**
**W-4690 Herne 1(DE)**
Erfinder: **Sonnenschein, Hans**
**Hatzperbogen 48**
**W-4300 Essen 1(DE)**
Erfinder: **Vollmer, Henning, Dr.**
**Frauenlobstrasse 110**
**W-4630 Bochum 4(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

EP 0 255 467 B1

Rank Xerox (UK) Business Services

## Beschreibung

Die Erfindung betrifft ein Verfahren sowie eine Vorrichtung zur Fermentierung von Rückständen mit hohem Anteil an organischen Bestandteilen.

Der Erfindung liegt die Aufgabe zugrunde, Rückstände mit hohen organischen Anteilen so zu fermentieren, daß ein Endprodukt mit möglichst geringem Feuchtegehalt und möglichst hohem verbleibendem Anteil an organischen Substanzen gewonnen werden kann.

Gelöst wird diese Aufgabe erfindungsgemäß mit den Merkmalen des Anspruchs 1 sowie mit der Vorrichtung nach Anspruch 6.

Vorzugsweise Ausgestoltungen ergeben sich aus den Merkmalen der Unteransprüche 2 bis 5 bzw. 7 und 8.

Nach dem erfindungsgemäßen Verfahren werden die Rückstände mit hohem organischem Anteil in mobilen Behältern, bevorzugt Containern, fermentiert und können bei Bedarf ohne weitere Fermentation in diesen Behältern zum Verbraucher gebracht werden. Die Behälter sind an eine zentrale Druck-/Saugleitung angeschlossen. Die Luftzuführung, insbesondere aber der Luftvolumenstrom zur biologischen Umsetzung, wird für jeden Behälter einzeln in Abhängigkeit von der Rotte-Temperatur geregelt.

Zur Erzielung eines Produktes mit hohem organischen Inhalt wird die Fermentation nach Abbau der leicht fermentierbaren Bestandteile abgebrochen. Indikator für das Abbrechen des Fermentationsprozesses ist der Temperaturverlauf im Rottegut. Die aufgrund der biologischen Aktivität auftretende Temperaturerhöhung gewährleistet einerseits eine ausreichende Entseuchung des Rottematerials und andererseits die angestrebte Trocknung. Der Prozeß wird abgebrochen, um das Rottematerial nur soweit wie nötig zu mineralisieren und möglichst viel wertvolle organische Substanz zur bodenverbesserung zu erhalten.

Um zu verhindern, daß die Rotte-Temperatur außerhalb der als vorteilhaft anzusehenden Soll-Temperaturbandbreite (anfangs z.B. im Bereich von 70° C; gegen Ende des Fermenationsprozesses stets niedriger) liegt, wird bevorzugt die Strömungsrichtung der Luftzufuhr zeitweilig umgekehrt, indem z.B. die eingesetzten Ventilatoren von Druck- auf Saugbetrieb (bzw. umgekehrt) geschaltet werden. Die bevorzugte Regelgröße ist demnach die Rotte-Temperatur; die Feuchtigkeit kann bei Bedarf als zusätzlicher Prozeßparameter zur direkten Messung und Regelung herangezogen werden. Dies verhindert zusammen mit der genannten Volumenstromregelung die Bildung einer Kondensationsschicht oder einer Schicht übertrockneten Materials.

Eine Variante ist, die Anlage nur im Druck-oder nur im Saugbetrieb, jeweils mit unterschiedlichen Strömungsrichtungen, zu betreiben. Gegebenenfalls ist es nötig, den Fermentationsprozeß durch eine Erwärmung der zugeführten Luft oder durch eine Wärmeisolierung der Behälter zu unterstützen.

Vorteile gegenüber dem Stand der Technik sind:
- Die zur Erzeugung eines zur Bodenverbesserung geeigneten Produktes erfolgt in sehr kurzer Zeit (je nach Eingangsmaterial 2 - 20 Tage) unter streng aeroben Bedingungen.
- Das Endprodukt weist trotz unterschiedlicher Feuchtigkeit des Eingangsmaterials einen konstanten Wassergehalt auf. Das gilt auch für den Winterbetrieb, wenn das Eingangsmaterial häufig deutlich feuchter ist als im Sommer.
- Die zur Aufbereitung des Rohmaterials erforderlichen Einrichtungen können mobil gestaltet werden, so daß bspw. Vorrichtungen zur Zerkleinerung oder Absiebung des Rohmaterials für mehrere Fermentierstationen nur einmal vorhanden zu ein brauchen.
  Gleiches gilt auch für die Geräte, die eventuell zur Nachbehandlung des Produktes eingesetzt werden sollen.
- Bei dem beschriebenen Verfahren treten keine Sickerwässer auf, die insbesondere bei der Mietenkompostierung normalerweise erhebliche Probleme bereiten.
- Die Geruchsbelästigung ist ebenfalls wegen des kontrollierten Trocknungsvorganges erheblich geringer. Sie kann wegen der in Leitungen gefaßten Luftströmung mittels eines Biofilters vollständig beseitigt werden.
- Der Befall der Anlage durch Ungeziefer (Fliegen, Ratten u. dgl.) wird weitgehend vermieden.
- Hervorzuheben ist außerdem der geringe Platzbedarf.

## Patentansprüche

1. Verfahren zur Fermentierung von Rückständen mit hohem Anteil an organischen Bestandteilen unter aeroben Bedingungen in mindestens einem Behälter,
   dadurch gekennzeichnet,
   daß die Fermentierung in mehreren abgeschlossenen mobilen Behältern erfolgt, die an eine zentrale Luftzuführung und- abführung angeschlossen sind, und daß die Fermentierung innerhalb eines Rottezeitraums von 2 bis 20 Tagen nach Abbau der leicht fermentierbaren Bestandteile, der anhand des Verlaufs der Rottetemperatur festgestellt wird, abgebrochen wird.

2. Verfahren nach den Anspruch 1,
**dadurch gekennzeichnet**,
daß die Fermentation durch Zuführung von erwärmter Luft unterstützt wird.

3. Verfahren nach einem der Ansprüche 1 oder 2,
**dadurch gekennzeichnet**,
daß die Strömungsrichtung des Luftstromes in Abhängigkeit von der sich während der Fermentation einstellenden Temperatur und/oder Feuchtigkeit der Rückstände zeitweilig umgekehrt wird.

4. Verfahren nach einem der Ansprüche 1 bis 3,
**dadurch gekennzeichnet**,
daß die Abluft biologisch gereinigt wird.

5. Verfahren nach einem der Ansprüche 1 bis 4,
**dadurch gekennzeichnet**,
daß der Volumenstrom der Luftzufuhr bzw. der Abluftabfuhr in Abhängigkeit von der Rotte-Temperatur der Rückstände regelbar ist.

6. Vorrichtung zur Durchführung des Verfahrens nach Anspruch 1, mit mindestens einem an eine Belüftungseinrichtung angeschlossenen und mit einer Einrichtung zur Messung der Rottetemperatur ausgestatteten Rottebehälter,
dadurch gekennzeichnet,
daß mehrere geschlossene mobile Rottebehälter vorgesehen sind, die an eine zentrale Luftzuführung und Abluftabführung angeschlossen sind.

7. Vorrichtung nach Anspruch 6,
**dadurch gekennzeichnet**,
daß im Behälter Mittel zur Führung der Strömung durch den Behälter bzw. die zu fermentierenden Rückstände vorgesehen sind.

8. Vorrichtung nach Anspruch 7,
**dadurch gekennzeichnet**,
daß der Behälter mit einer Einrichtung zur Messung der Feuchtigkeit ausgestattet ist.

## Claims

1. A method for fermenting residues having a high content of organic constituents under aerobic conditions in at least one container, characterised in that
the fermentation takes place in a plurality of sealed mobile containers which are connected to a central air supply and removal means, and that the fermentation is stopped within a rotting period of 2 to 20 days after the decomposition of the readily fermentable constituents, which period is determined using the curve of the rotting temperature.

2. A method according to Claim 1, characterised in that the fermentation is supported by supplying heated air.

3. A method according to one of Claims 1 or 2, characterised in that the direction of flow of the air stream is temporarily reversed depending on the temperature and/or moisture content of the residues during the fermentation.

4. A method according to one of Claims 1 to 3, characterised in that the waste air is purified biologically.

5. A method according to one of Claims 1 to 4, characterised in that the flow rate of the air supply or of the waste air removal can be controlled dependent on the rotting temperature of the residues.

6. An apparatus for performing the method according to Claim 1, with at least one rotting container connected to an aeration device and equipped with a means for measuring the rotting temperature, characterised in that a plurality of closed mobile rotting containers are provided which are connected to a central air supply and waste air removal means.

7. An apparatus according to Claim 6, characterised in that means for guiding the flow through the container or through the residues to be fermented are provided in the container.

8. An apparatus according to Claim 7, characterised in that the container is equipped with a means for measuring the moisture content.

## Revendications

1. Procédé pour la fermentation de déchets à haute teneur en composants organiques dans des conditions aérobies dans au moins un récipient,
caractérisé en ce que la fermentation a lieu dans plusieurs récipients mobiles séparés, qui sont raccordés à une alimentation et évacuation d'air centrale, et en ce que la fermentation est interrompue à l'intérieur d'une période de temps de fermentation de deux à vingt jours après décomposition des composants facilement fermentables, qui est déterminée en référence à l'allure de la température de fermentation.

2. Procédé selon la revendication 1,

caractérisé en ce que la fermentation est assistée par amenée d'air réchauffé.

3. Procédé selon une des revendications 1 ou 2, caractérisé en ce que le sens d'écoulement du courant d'air est inversé, de façon intermittente, selon la température existant pendant la fermentation et/ou l'humidité des déchets.

4. Procédé selon une des revendications 1 à 3, caractérisé en ce que l'air évacué est purifié biologiquement.

5. Procédé selon une des revendications 1 à 4, caractérisé en ce que le débit de l'alimentation ou de l'évacuation d'air est réglable selon la température de fermentation des déchets.

6. Dispositif pour mettre en oeuvre le procédé selon la revendication 1, comportant au moins un récipient de fermentation raccordé à un dispositif de ventilation et équipé d'un dispositif pour mesurer la température de fermentation,
caractérisé en ce que plusieurs récipients de fermentation mobiles fermés sont prévus, qui sont raccordés à une alimentation et évacuation d'air centrale.

7. Dispositif selon la revendication 6, caractérisé en ce que, dans le récipient, sont prévus des moyens pour guider le courant à travers le récipient ou les déchets qui fermentent.

8. Dispositif selon la revendication 7, caractérisé en ce que le récipient est équipé d'un dispositif pour mesurer l'humidité.